# EUROPEAN PATENT SPECIFICATION

(11) **EP 4 112 272 B1**
(45) Date of publication and mention of the grant of the patent: **28.06.2023**
(21) Application number: 22179708.7
(22) Date of filing: 17.06.2022
(51) Int. Cl.: B29C 51/16, B29C 51/26, B29C 51/06, B65D 1/34, B65D 5/56, B29K 311/12, B29L 31/00, B29C 51/10, B29C 51/12, B29C 51/32, B65D 25/14

(54) **METHOD AND APPARATUS FOR MAKING A CONTAINER COMPRISING A TRAY INTERNALLY COVERED WITH A LAYER OF THERMOPLASTIC MATERIAL**
VERFAHREN UND VORRICHTUNG ZUR HERSTELLUNG EINES BEHÄLTERS MIT EINER SCHALE, DIE INNEN MIT EINER SCHICHT AUS THERMOPLASTISCHEM MATERIAL ÜBERZOGEN IST
PROCEDE ET APPAREIL DE FABRICATION D'UN RECIPIENT COMPRENANT UN PLATEAU RECOUVERT INTERIEUREMENT D'UNE COUCHE DE MATIERE THERMOPLASTIQUE

(30) Priority: 30.06.2021 IT 202100017249
(43) Date of publication of application: 04.01.2023
(73) Proprietor: Mondini S.r.l., 25122 Brescia (BS) (IT)
(72) Inventor: MONDINI, Giovanni, 25033 Cologne BS (IT)
(74) Representative: Ponchiroli, Simone

(56) References cited:
- EP-A2- 2 213 350
- WO-A1-03/101839
- GB-A- 2 057 337
- JP-A- 2001 192 014
- JP-A- 2003 160 119
- JP-A- 2006 240 712

## Description

This invention relates to a method and an apparatus for making a container comprising a tray internally covered with a layer of thermoplastic material, in particular a tray constituted of cellulose-based material, such as paper or paperboard.

In more detail, this invention is intended for a type of container in which the tray, covered with the layer of thermoplastic material, is intended to be sealed by sealing an upper film at an annular flange of the tray.

In the context of the following description, the term "container" may be used to indicate the tray covered with the layer of thermoplastic material either considered in itself, or sealed with an upper film (in that case the container will also contain a product).

The containers for which this invention is intended may comprise trays having various types of shapes; however, in general, the tray has a bottom wall, a lateral wall and an upper annular flange.

In recent years, making containers which comprise a tray made of cellulose material internally covered with a layer of thermoplastic material gradually became increasingly widespread thanks to the great advantage that this type of containers allows regarding savings in the amount of plastic used, compared with similar containers which are made entirely of plastic.

In particular, according to most solutions currently used on the market, the tray is constituted of a paper and cardboard industry article, that is to say, a paper, cardboard- or paperboard-based article, which comprises one or more panels of material and which, starting from a spread out configuration in which it extends mainly in one plane, can be brought to a three-dimensional configuration corresponding to the desired tray shape, by means of suitable folding or shaping of the various panels.

The containers of this type currently on the market may be classed in three different types.

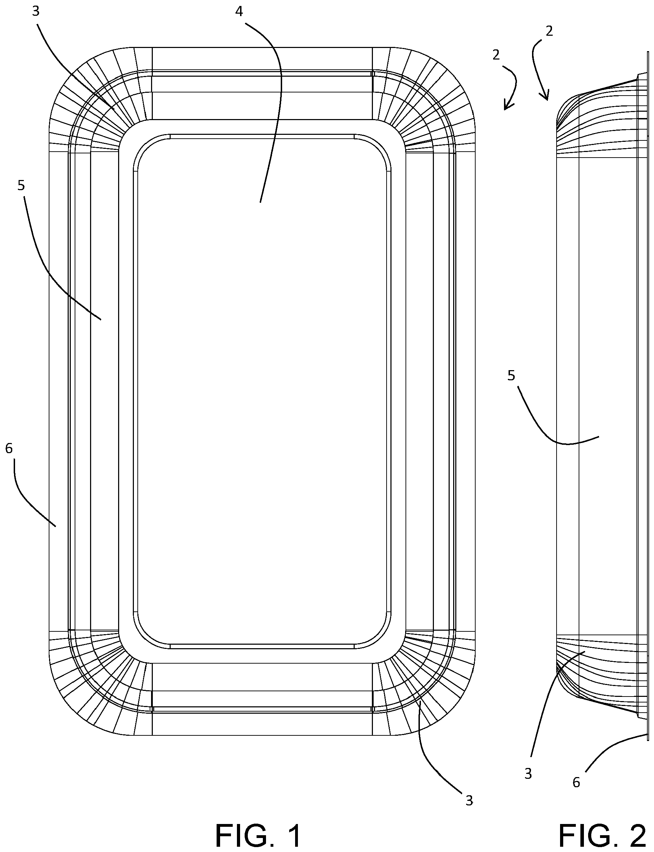

According to a first known type, the tray is constituted of a single sheet of cardboard or paperboard which, before adopting the three-dimensional shape, is flat and has a central zone (the one intended to constitute the bottom wall) surrounded without interruption by a main annular portion of material, intended to constitute the lateral walls of the tray after it has been folded upwards. In the step of folding the lateral walls upwards relative to the bottom wall, in the lateral walls themselves wrinkled zones are created, suitable for compensating for the smaller extent of the surface caused by the folding (the area of the lateral walls is less than that of the main annular portion). In many applications, the main annular portion is surrounded by a further secondary annular portion suitable for constituting the perimetric flange of the tray, which extends outwards starting from the upper edge of the lateral walls. Since the perimetric flange also extends in plan view less than the secondary annular portion from which it is obtained, the wrinkled zones also continue on the annular flange. An example of a container according to the first type is shown in Figures 1 and 2.

In contrast, in the second known type the tray comprises a main panel, and a plurality of secondary panels which extend outwards from the main panel. The main panel is the one which in the tray is positioned at the bottom wall, whilst the secondary panels are those which are positioned at the lateral walls. Depending on the embodiments, the secondary panels may or may not comprise outer projections intended to form the upper flange.

Unlike those of the first type described above, the trays of the second type do not usually have wrinkled zones, and the lateral walls or the perimetric flange are made to extend with a degree of continuity exclusively by attempting to bring the edges of the adjacent panels as close to each other as possible before applying the layer of thermoplastic material. Examples of containers which use trays of the second type are described in the following documents: US 3358900, US 3489331, US 4046310, FR 2406522, US 5253801, FR 2826938, FR 2933329, WO 2012/049005 and WO 2018/017783.

In the third known type the tray again comprises a main panel, and a plurality of secondary panels which extend from the main panel. In this case the main panel is that which in the tray is positioned at the upper flange and is constituted of a frame without interruptions, whilst the secondary panels define the lateral walls and the bottom wall. Some examples of containers of the third type are described in patent application EP 3693284 A1, others, characterised by the use of two separate pieces of material for making the tray, are described in patent application WO 99/67143. Examples of known manufacturing methods can be seen in JP 2003 160119 A, WO 03/101839 A1 or JP 2001 192014 A.

Irrespective of the type of container, the method for making it involves first forming of the tray starting from the paper and cardboard industry article from which it must be obtained. In the most widespread applications, this result is achieved by positioning the paper and cardboard industry article over a suitably shaped mould, and pushing the paper and cardboard industry article into the mould by means of a suitable punch. The action of the punch causes folding of the various panels in the case of containers of the second and third type described above, whilst it causes forming by shaping of the single panel and forming of the wrinkled zones, in the case of the containers of the first type described above.

Then the tray is inserted in a thermoforming mould and the layer of thermoplastic material is thermoformed on the tray. For that purpose, a sheet of thermoplastic material is positioned over the tray and in contact with its flange, after which the mould is closed securely clamping, between the two movable parts of the mould, both the flange of the tray and the sheet of thermoplastic material. The sheet is then heated and, by means of a vacuum between the sheet of thermoplastic material and the tray or an overpressure on the opposite side, is made to stick to the lateral walls and to the bottom wall of the tray. In contrast, at the flange, sticking of the heated sheet to the tray is obtained thanks to the mechanical pressure applied by the mould. However all of the known types of containers have several major disadvantages.

In fact, the containers for which this invention is intended are usually intended to allow the packaging of food products in a controlled atmosphere by sealing a protective film to the layer of thermoplastic material, containing the food product between them. With all of the types of containers the sealing usually takes place at the perimetric flange, even if in some cases it may also extend on the rest of the free surface of the container (known as Skin packaging). Regarding the containers of the first and of the second type, over the years it has been possible to ascertain that the presence of the tray at the perimetric flange, although desirable in order to guarantee container mechanical stiffness, makes the operations for sealing the upper protective film very critical. In fact at, respectively, the wrinkled zones or the discontinuity zones of the flange of the tray, the sealing may in many cases be either ineffective (that is to say, leaving small gaps for the passage of air) or in any case weak (that is to say, such that it easily yields as a result of handling by users). This problem is particularly felt with containers of the first type where the wrinkled zones are constituted of a sequence of protuberances and hollows very close together which cause a considerable variability in the thickness of the material of the flange extending over just a few millimetres.

Use of containers of the first type for packaging in a controlled atmosphere therefore never really caught on, on the market. Containers of this type are therefore mainly used for other applications in which the upper sealing is not required.

In a different way, containers of the second and of the third type have the shared disadvantage of some degree of construction complication regarding the tray, which negatively impacts production costs, compared with those of the first type.

In this context the technical purpose which forms the basis of this invention is to provide a method and an apparatus for making a container comprising a tray internally covered with a layer of thermoplastic material which overcome the above-mentioned disadvantages.

In particular the technical purpose of this invention is to provide a method and an apparatus for making a container comprising a tray internally covered with a layer of thermoplastic material, which allow a container to be obtained whose performance is similar to that of the best prior art containers, but at a cost comparable to that of the least expensive containers.

The technical purpose specified and the aims indicated are substantially achieved by a method and an apparatus for making a container comprising a tray internally covered with a layer of thermoplastic material, as described in the appended independent claims. Particularly preferred embodiments are described in the appended dependent claims.

Further features and the advantages of this invention will be more apparent from the detailed description of several preferred, non-limiting embodiments of a method and an apparatus for making a container comprising a tray internally covered with a layer of thermoplastic material, illustrated with reference to the accompanying drawings, in which:
- Figure 1 is a top view of an example of a tray usable in the context of the method according to this invention;
- Figure 2 is a side view of the tray of Figure 1;
- Figure 3 is a front view vertical section of an apparatus according to this invention during a first operating step;
- Figure 4 is an enlarged view of the detail IV - IV of Figure 3;
- Figure 5 shows the apparatus of Figure 3 during a subsequent second operating step;
- Figure 6 is an enlarged view of the detail VI - VI of Figure 5;
- Figure 7 shows the apparatus of Figure 5 during a subsequent third operating step;
- Figure 8 is an enlarged view of the detail VIII - VIII of Figure 7;
- Figure 9 shows the apparatus of Figure 7 during a subsequent fourth operating step;
- Figure 10 is an enlarged view of the detail X - X of Figure 9;
- Figure 11 shows the apparatus of Figure 9 during a subsequent fifth operating step;
- Figure 12 is an enlarged view of the detail XII - XII of Figure 11;
- Figure 13 shows the apparatus of Figure 11 during a subsequent sixth operating step; and
- Figure 14 is an enlarged view of the detail XIV - XIV of Figure 13.

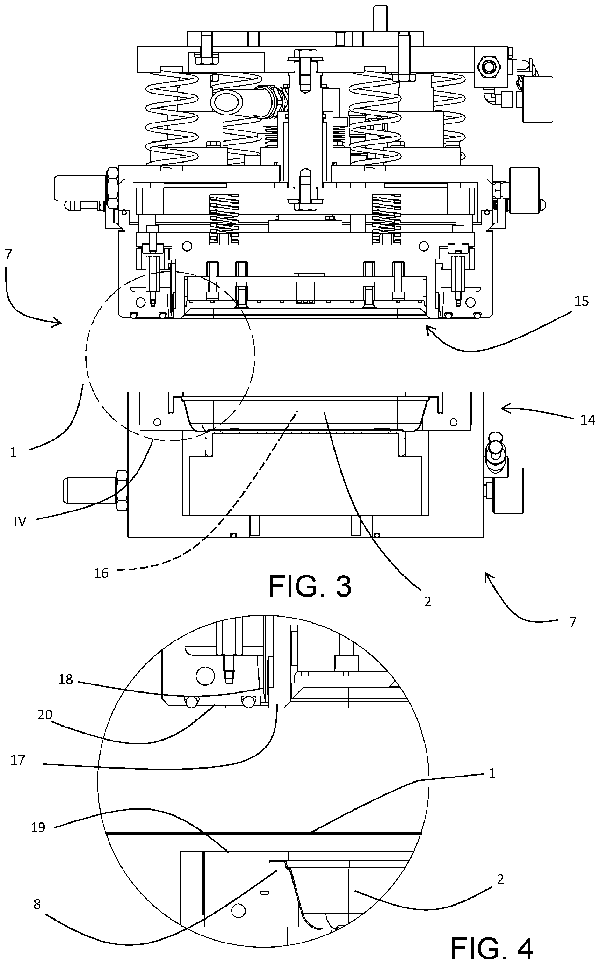

In Figures 4, 6, 8, 10,12 and 14 the thick line represents the sheet of thermoplastic material 1; it should be noticed that the thickness shown in the figures is not the real thickness but is only intended to allow the film to be distinguished from the other lines in the drawing. In fact, the real thickness is much less.

The following is a description initially of the method according to this invention, and then of the apparatus. It should be noticed that the apparatus is capable of implementing the method according to this invention, and that what will be described relative, respectively, to the method and to the apparatus, shall be understood to also apply, if technically applicable, respectively to the apparatus and to the method.

In the context of the following description, the terms "mechanical" and mechanically", combined with verbs such as press, retain or clamp, shall be understood in the sense that the actions indicated by those verbs are performed by mechanical devices which make physical contact with the parts on which those actions are applied.

Before going into the merit of the detailed description of this invention, it must be emphasised that it is based on the insight of being able to make containers of the first known type described above, in a way that is technically different from what has been done until now, which allows the containers made in this way to be used for optimum quality packaging in a controlled atmosphere. As described in more detail below, the innovative insight which forms the basis of this invention was that of using a completely new way of applying the layer of thermoplastic material to the upper flange of the tray, that is to say, using exclusively thermoforming, without applying any mechanical pressure on the layer of thermoplastic material at the upper flange of the tray.

The starting point for implementing the method according to this invention is therefore that of taking a tray 2 constituted of a single sheet of folded and shaped cellulose material (that is to say, similar to that of the known first type of containers described above), and in which wrinkled zones 3 are present which make it possible to compensate for the different extent that said sheet of cellulose material had before being shaped. In general the tray 2 comprises a bottom wall 4, a lateral wall 5 which extends upwards from the bottom wall 4 and an annular flange 6 which extends outwards starting from an upper part of the lateral wall 5 as illustrated by way of example in Figure 1 and 2, in which the bottom wall 4 has a rectangular perimeter with rounded corners. As already indicated, the bottom wall 4, the lateral wall 5 and the annular flange 6 are constituted of a single sheet of material, folded and shaped in such a way that the annular flange 6 and the lateral wall 5 have wrinkled zones 3. As in the case of the tray 2 of Figure 1, the wrinkled zones 3 originate at zones in which the perimeter of the bottom wall 4 extends in a way that is not straight. Returning to the method according to this invention, it comprises first a positioning step, in which the tray 2 is positioned in a thermoforming mould 7. Advantageously, and in a known way, for that purpose use will be made of a thermoforming mould 7 suitably sized for the tray 2 of interest.

Preferably, use will be made of a mould which has a first peripheral portion 8 configured specifically to support from below the annular flange 6 of the tray 2.

Then, the method comprises a covering step during which a sheet of thermoplastic material 1 is thermoformed on the tray 2 inside the thermoforming mould 7. During the covering step the sheet of thermoplastic material 1 is made to stick to the bottom wall 4, to the lateral wall 5 and to the annular flange 6 of the tray 2 forming the layer of thermoplastic material 9 which covers the inside of it (it should be noticed that in the context of this description the definition sheet of thermoplastic material 1 is used to indicate the material before the thermoforming, whilst the definition layer of thermoplastic material 9 indicates the material thermoformed on the tray 2). According to the main innovative aspect of this invention, the covering step is carried while preventing the thermoforming mould 7 from making contact with the layer of thermoplastic material 9 at least at the wrinkled zones 3 of the annular flange 6. However, preferably, the covering step is carried out while preventing the thermoforming mould 7 from making contact with the sheet of thermoplastic material 1 at the entire annular flange 6.

In other words, unlike what has been known until now, in the method according to this invention the step of thermoforming the sheet of thermoplastic material 1 inside the tray 2 is carried out without mechanically clamping the sheet of thermoplastic material 1 on the flange of the tray 2. Consequently any parts of the shaped mould facing the first peripheral portion 8 will always be kept at a distance from the latter which is greater than the sum of the maximum nominal thickness of the annular flange 6, the thickness of the sheet of thermoplastic material 1 and a safety margin (advantageously greater than or equal to two tenths of a millimetre).

Therefore, according to this invention, in order to keep the sheet of thermoplastic material 1 correctly positioned during the covering step, the method requires the use of a sheet of thermoplastic material 1 wider than the outer perimeter of the annular flange 6 of the tray 2, and for this to be mechanically retained (for example by the mould), outside the zone affected by the thermoforming.

In the preferred embodiments, during the covering step the sheet of thermoplastic material 1 is retained by the thermoforming mould 7 at a first zone 10 of the sheet of thermoplastic material 1, which is placed outside the zone of the sheet of thermoplastic material 1 which, during the covering step, is made to stick to the annular flange 6 (the latter, hereinafter, will be indicated as the second zone 11).

In some embodiments, the sheet of thermoplastic material 1 is constituted of a continuous sheet unwound from a roll.

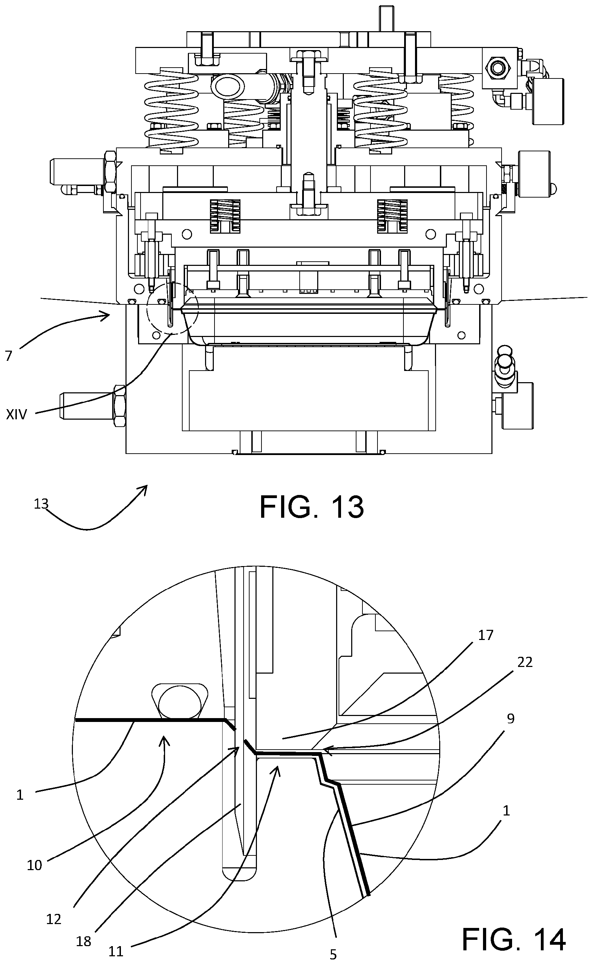

In some embodiments, after the covering step, the method also comprises a cutting step in which the sheet of thermoplastic material 1 is cut at an edge zone 12 of it which is outside its second zone 11, and inside the first zone 10 at which it is mechanically retained (Figure 14).

If the sheet of thermoplastic material 1 is obtained from a continuous sheet unwound from a roll, the cutting step may be carried out either without interrupting the continuity of the continuous sheet, that is to say, by cutting out "windows" in the continuous sheet, or by severing the continuous sheet and obtaining a series of pieces.

Thanks to the absence of mechanical clamping at the annular flange 6 of the tray 2, at the wrinkled zones 3 of the annular flange 6 the sheet of thermoplastic material 1 is applied to the annular flange 6 in such a way that it remains resting on the crests formed by the material of the tray 2, without those crests being crushed as in contrast occurs when sticking in the sheet of thermoplastic material 1 to the annular flange 6 of the tray 2 is obtained by means of mechanically clamping the two. In some embodiments at the end of the covering step the sticking of the sheet of thermoplastic material 1 to the flange of the tray 2 is only partial. In other embodiments in contrast it may be complete.

In some embodiments, once the tray 2 has been covered with the layer of thermoplastic material 9, the container can be considered complete and ready for a future use. In fact, at the moment of use, once a product has been positioned inside the container, the latter can be sealed with an upper film, proceeding as described below.

In contrast, in other embodiments, the method requires the container to be completed by inserting the product in it and sealing it. In that case, after the covering step, the method comprises a positioning step during which the product to be packaged is positioned in the tray 2 internally covered with the layer of thermoplastic material 9, in particular at the bottom wall 4. Then the method comprises a sealing step during which a sealing film is positioned over the tray 2 and is fixed to the layer of thermoplastic material 9 at least at the annular flange 6 of the tray 2 (however, more extensive sticking in accordance with the Skin technique is possible). Advantageously fixing is achieved by heat-sealing the upper film to the layer of thermoplastic material 9.

For that purpose, during the sealing step the sealing film is heated and mechanically pressed onto the layer of thermoplastic material 9 at the annular flange 6. Preferably, at the same time the layer of thermoplastic material 9 is pressed onto the annular flange 6 of the tray 2. In the preferred embodiments all of this is achieved by mechanically clamping together the annular flange 6, the layer of thermoplastic material 9 and the upper film. If at the end of the covering step the sheet of thermoplastic material 9 does not completely stick to the annular flange 6 of the tray 2 at the wrinkled zones 3, complete sticking is achieved as a result of the sealing step, carried out by mechanically clamping together the annular flange 6, the layer of thermoplastic material 9 and the upper film.

Moving on to the apparatus 13 according to this invention, as already indicated above, it is configured to implement the method described so far.

The apparatus 13 comprises first a thermoforming mould 7 which includes a first part 14 and a second part 15. At least one of either the first part 14 or the second part 15 is movable relative to the other between a home position and an operating position. When they are in the home position the first part 14 and the second part 15 are at a distance from each other and allow access to the inner part of the thermoforming mould 7. When they are in the operating position, the first part 14 and the second part 15 are coupled to each other in a gas-tight way and the thermoforming mould 7 is closed.

The first part 14 defines a housing 16 configured to house a tray 2 of a predetermined type (which will have all of the characteristics indicated above which are required for execution of the method according to this invention), whilst the second part 15 constitutes a cover for the housing 16.

In the first part 14 a first peripheral portion 8 is identifiable which is configured to support, in use, the annular flange 6 of the tray 2. Therefore, the first peripheral portion 8 is placed substantially along the outline of the housing 16 for the tray 2.

When the first part 14 and the second part 15 are in the operating position, identifiable in the second part 15 there is a second peripheral portion 17 which corresponds to the portion of the second part 15 which is facing the first peripheral portion 8 (in the embodiments in which the mould is positioned horizontally, the second peripheral portion 17 is the one vertically aligned with the first peripheral portion 8).

According to the main innovative aspect of this invention, when the first part 14 and the second part 15 are in the operating position, the second peripheral portion 17 is at a distance from the first peripheral portion 8 in such a way that it does not make contact with the layer of thermoplastic material 9, once the latter has been applied to the tray 2 and is stuck to it, at least at the wrinkled zones 3 of the annular flange 6, but preferably at the entire annular flange 6. As explained above, in order to obtain that result the second peripheral portion 17 will always be kept at a distance from the first peripheral portion 8 which is greater than the sum of the maximum nominal thickness of the annular flange 6 of the tray 2 which the apparatus 13 is intended to process, the thickness of the sheet of thermoplastic material 1 and a safety margin (advantageously greater than or equal to two tenths of a millimetre). In other words, it will always be the case that between the first peripheral portion 8 and the second peripheral portion 17 there is always a distance such that in use there is always an empty space 22 present between the second peripheral portion 17 and the layer of thermoplastic material 9.

In some embodiments the second peripheral portion 17 is fixed relative to the rest of the second part 15 of the thermoforming mould 7 and therefore cannot vary its distance from the first peripheral portion 8 when the first part 14 and the second part 15 are in the operating position.

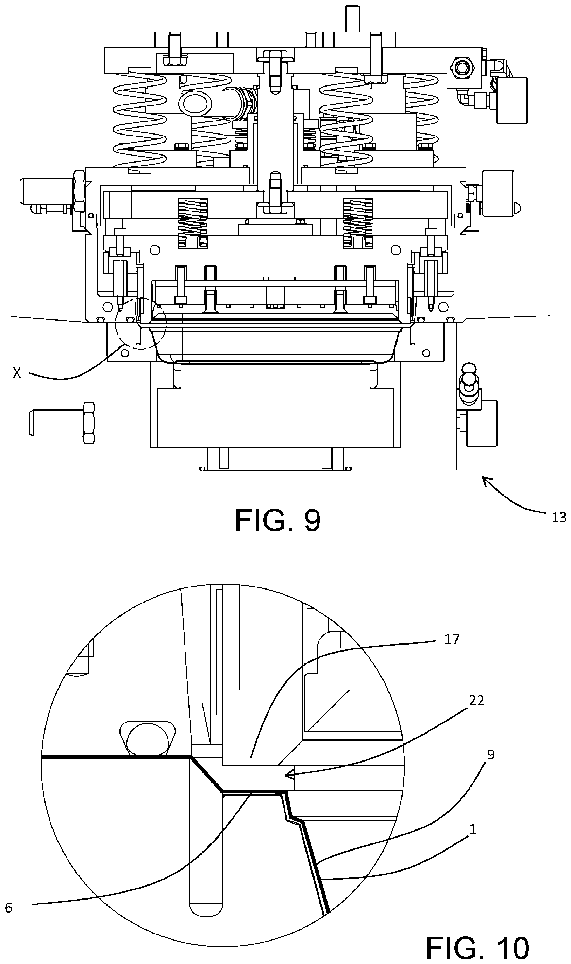

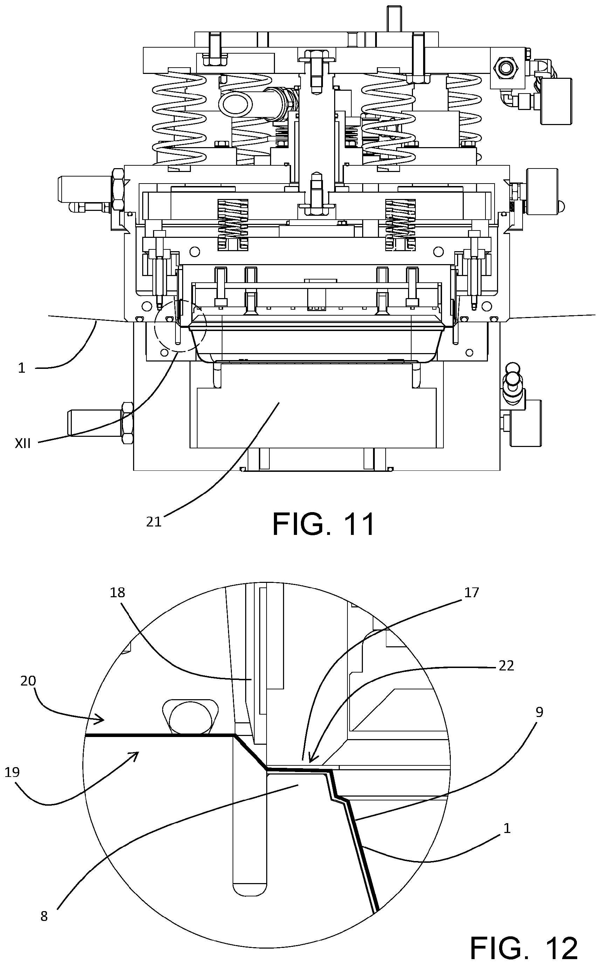

In other embodiments, in contrast, the second peripheral portion 17 is movable relative to the rest of the second part 15 of the thermoforming mould 7. In particular, when the second part 15 is in the operating position, the second peripheral portion 17 is movable, relative to the rest of the second part 15, towards and away from the first part 14. In more detail, the second peripheral portion 17 is movable between a distal position and a proximal position. When it is in the proximal position (Figure 12), the second peripheral portion 17 is closer to the first peripheral portion 8 than when it is in the distal position (Figure 10).

In some embodiments not illustrated, the shifting of the second peripheral portion 17 to the proximal position occurs before the sheet of thermoplastic material 1 is applied to the tray 2; in that case, during the shifting of the second peripheral portion 17 from the distal position to the proximal position (with the first part 14 and the second part 15 in the operating position), the second peripheral portion 17 shifts the sheet of thermoplastic material 1 towards the first peripheral portion 8 but without making it make contact with it or with the tray 2.

In other embodiments, such as that illustrated in the accompanying figures, the shifting of the second peripheral portion 17 to the proximal position in contrast occurs after the sheet of thermoplastic material 1 has already been applied to the tray 2 (Figure 12); advantageously in fact in this case associated with the second peripheral portion 17 are the cutting means 18 for the sheet of thermoplastic material 1 which are described below, and the shifting serves to move the cutting means 18 towards the sheet of thermoplastic material 1. In general, advantageously, once the first part 14 and the second part 15 have moved from the home position to the operating position, the sheet of thermoplastic material 1 is clamped between the first part 14 and the second part 15. In particular, the sheet of thermoplastic material 1 is clamped between a first clamping portion 19 fixed to the first part 14 and a second clamping portion 20 fixed to the second part 15, where the first clamping portion 19 and the second clamping portion 20 are positioned outside, respectively, the first peripheral portion 8 and the second peripheral portion 17, relative to the housing 16 defined by the first part 14 of the thermoforming mould 7. By retaining the sheet of thermoplastic material 1 between them, the first clamping portion 19 and the second clamping portion 20 guarantee that the sheet of thermoplastic material 1 remains taut over the tray 2, when the first part 14 and the second part 15 of the thermoforming mould 7 reach the operating position.

In some embodiments, the first clamping portion 19 and the second clamping portion 20 extend in an annular fashion around a central axis of the housing 16 (perpendicular to a central point of the bottom wall 4), in such a way as to clamp the sheet of thermoplastic material 1 along a continuous perimeter.

In other embodiments, particularly suitable for the case in which the sheet of thermoplastic material 1 is obtained by unwinding a reel, the first clamping portion 19 and the second clamping portion 20 may comprise only respective upstream portions and downstream portions (and therefore not have an annular shape), which are positioned respectively upstream and downstream of the housing 16 relative to a direction of unwinding of the reel (for example one to the left and one to the right of the housing 16, in the case of the mould illustrated in the accompanying figures considering that the direction of unwinding goes from left to right or vice versa).

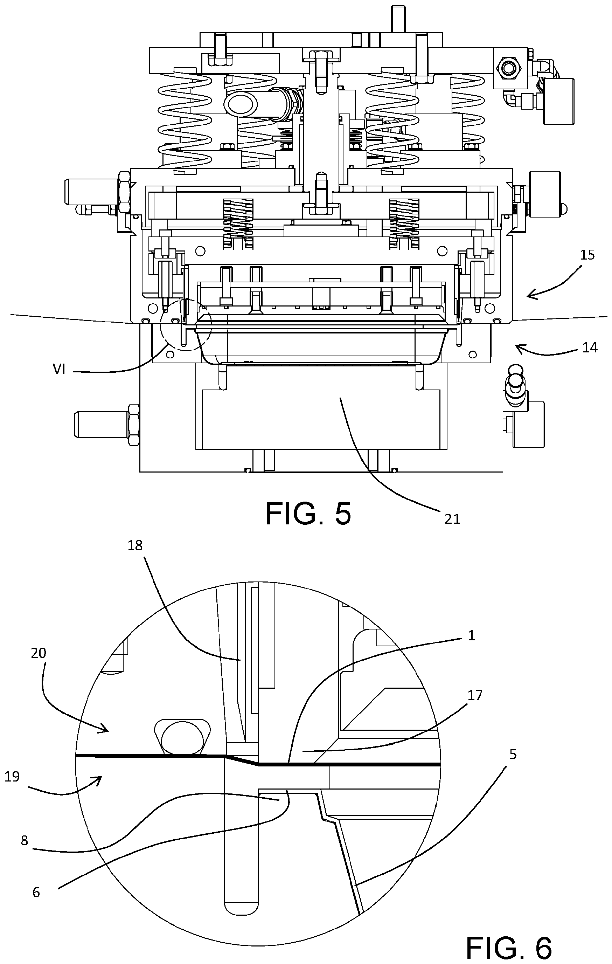

The apparatus 13 also comprises positioning means (not illustrated) configured to position a sheet of thermoplastic material 1 between the first part 14 and the second part 15, when they are in the home position and to keep it in that position during the passage of the first part 14 and/or of the second part 15 from the home position to the operating position. In use, the passage of the first part 14 and/or of the second part 15 from the home position to the operating position, causes clamping of the sheet of thermoplastic material 1 between the first part 14 and the second part 15 (Figure 6). In this condition it is possible that the second peripheral portion 17 is in contact with the sheet of thermoplastic material 1.

Advantageously, the means for positioning the sheet of thermoplastic material 1 may be made in a similar way to the retaining means commonly used in packaging machines for retaining a sealing film over a tray to be sealed. In particular, the positioning means may be configured to gradually unwind the sheet of thermoplastic material 1 from a reel.

Advantageously, the apparatus 13 also comprises cutting means 18 (such as blades as in the accompanying figures) for cutting the sheet of thermoplastic material 1 after it has been applied to the tray 2, separating the part applied to the tray 2 from the part retained by the retaining means. Therefore, the cutting means 18 are positioned outside the first peripheral portion 8 and the second peripheral portion 17, advantageously between the retaining means and the first peripheral portion 8 and the second peripheral portion 17. Furthermore, when the first part 14 and the second part 15 are in the operating position, the cutting means 18 are switchable between an inactive configuration in which they are at a distance from the sheet of thermoplastic material 1 (Figure 12), and an active configuration in which in use they interfere with the sheet of thermoplastic material 1 (Figure 14), so that the switching of the cutting means 18 from the inactive configuration to the active configuration in use causes the cutting of the sheet of thermoplastic material 1.

Furthermore, the apparatus 13 comprises heating means (not illustrated since they are of the known type) for heating the sheet of thermoplastic material 1 which are configured to heat the sheet of thermoplastic material 1 when it is clamped between the first part 14 and the second part 15, to bring it to the temperature necessary for its thermoforming on the tray 2. In the preferred embodiment the heating means heat the entire second part 15 at its surface facing the housing 16.

Depending on the embodiments, the apparatus 13 may also comprise suction means (not illustrated since they are of the known type) which are associated with the first part 14 and/or blowing means (not illustrated since they are of the known type) which are associated with the second part 15 of the thermoforming mould 7. The suction means are configured to create in use a vacuum between the heated sheet of thermoplastic material 1 and the first part 14 of the thermoforming mould 7; for that purpose they may comprise a suction unit and a plurality of ducts which connect the suction unit to a plurality of different points of the housing 16. In turn, the blowing means are configured to feed pressurised air between the second part 15 and the heated sheet of thermoplastic material 1; for that purpose, the blowing means may comprise an air pressurisation device connected by means of one or more ducts to the second part 15 over the housing 16. Both the suction means and the blowing means are suitable for deforming the sheet of thermoplastic material 1 and making it stick to the bottom wall 4, to the lateral wall 5 and to the annular flange 6 of the tray 2, thereby making the layer of thermoplastic material 9 stuck to the tray 2.

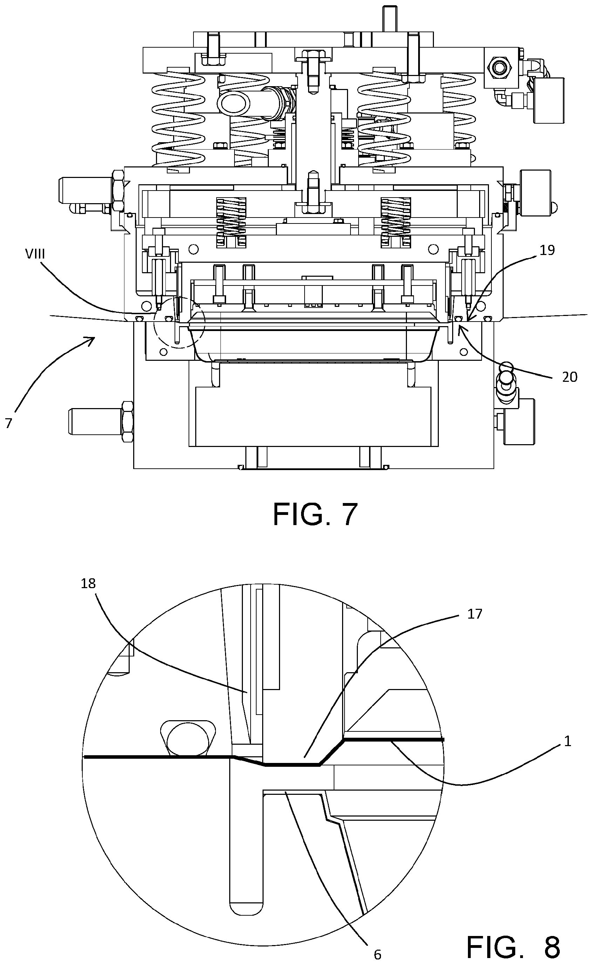

In the preferred embodiment illustrated in the accompanying figures, there are also auxiliary suction means present (not illustrated since they are of the known type) which are configured to create in use a vacuum between the sheet of thermoplastic material 1 not yet completely heated and the second part 15 of the thermoforming mould 7, to make the sheet of thermoplastic material 1 stick to the second part 15 (Figure 8) and to guarantee the heating of it necessary for the subsequent step of sticking to the tray 2 (Figure 10). Finally, associated with the housing 16 there may be an ejection mechanism 21 suitable for extracting the tray 2 from the housing 16.

Operation of the apparatus 13 is obvious from the structural description above. With the first part 14 and the second part 15 in the home position, a tray 2 is inserted in the housing 16 defined by the first part 14, thereby implementing the positioning step.

Then the sheet of thermoplastic material 1 is positioned over the tray 2 between the first part 14 and the second part 15 and, advantageously, is held taut by the positioning means (Figures 3 and 4).

Subsequently, the first part 14 and the second part 15 are moved to the operating position; at the same time the retaining means lock the sheet of thermoplastic material 1 (Figure 5 and 6). The second peripheral portion 17 is in the distal position.

After an initial heating of the sheet of thermoplastic material 1 by the heating means, a vacuum is created between the sheet of thermoplastic material 1 and the second part 15 of the thermoforming mould 7, in such a way as to deform the sheet of thermoplastic material 1 making it stick to the second part 15 (Figures 7 and 8).

The contact between the sheet of thermoplastic material 1 and the second part 15 guarantees that the sheet is heated to the correct temperature for the subsequent step of actual thermoforming. In fact, once that temperature has been reached, the vacuum between the sheet of thermoplastic material 1 and the second part 15 is released and the suction means and/or the blowing means are activated to create a relative vacuum between the sheet of thermoplastic material 1 and the first part 14 of the thermoforming mould 7, so as to make the sheet of thermoplastic material 1 stick to the tray 2 creating the layer of thermoplastic material 9 (therefore the covering step is implemented). All of this takes place while preventing any contact between the mould, and in particular its second peripheral portion 17, and the second zone 11 of the sheet of thermoplastic material 1, that is to say, that applied to the flange of the tray 2 (either only at the wrinkled zones 3 or, preferably, at the entire annular flange 6) (Figures 9 and 10).

In the embodiment illustrated in the accompanying figures, at that point the second peripheral portion 17 is brought into its proximal position (Figures 11 and 12). However, as already explained above, in other embodiments that shifting may either not be required, or may be performed before the covering step.

Finally, the cutting means 18 are activated to carry out the cutting step. The cutting means 18 are therefore switched from the inactive configuration to the active configuration, causing cutting of the sheet of thermoplastic material 1 at a zone which is intermediate between its second zone 11 applied to the flange of the tray 2, and its first zone 10 retained by the retaining means.

At this point the container is ready to be filled and sealed with the sealing film in the ways indicated above.

This invention brings important advantages.

In fact, thanks to this invention, an innovative way of making containers of the first type described above has been provided, which allows the use of these containers even for packaging in a controlled atmosphere, with performance comparable to that of the most expensive containers of the second and third type currently used on the market.

Finally, it should be noticed that this invention is relatively easy to produce and that even the cost linked to implementing the invention is not very high.

The invention described above may be modified and adapted in several ways without thereby departing from the scope of the inventive concept.

## Claims

1. A method for making a container comprising a tray internally covered with a layer of thermoplastic material, the method comprising the following operating steps:
a positioning step, in which a tray (2) is positioned in a thermoforming mould (7), the tray comprising a bottom wall (4), a lateral wall (5) which extends upwards from the bottom wall (4) and an annular flange (6) which extends outwards starting from an upper part of the lateral wall (5), wherein the bottom wall (4), the lateral wall (5) and the annular flange (6) are constituted of a single sheet of material, folded and shaped in such a way that the annular flange (6) and the lateral wall (5) have wrinkled zones (3);
a covering step during which a sheet of thermoplastic material (1) is thermoformed on the tray (2) inside the thermoforming mould (7), and made to stick to the bottom wall (4), to the lateral wall (5) and to the annular flange (6) of the tray (2) forming the layer of thermoplastic material (9), the covering step being carried out while preventing the thermoforming mould (7) from making contact with the layer of thermoplastic material (9) at the wrinkled zones (3) of the annular flange (6).

2. The method according to claim 1, wherein the covering step is carried out while preventing the thermoforming mould (7) from making contact with the sheet of thermoplastic material (1) at the entire annular flange (6).

3. The method according to claim 1 or 2, wherein during the covering step the sheet of thermoplastic material (1) is retained by the thermoforming mould (7) at a first zone (10) of it, which is placed outside a second zone (11) of it which, during the covering step, is applied to the annular flange (6).

4. The method according to claim 3, also comprising, after the covering step, a cutting step in which the sheet of thermoplastic material (1) is cut at an edge zone (12) of it which is outside its second zone (11).

5. The method according to any one of claims 1 to 4, also comprising, after the covering step, a positioning step during which a product is positioned in the tray (2) internally covered with the layer of thermoplastic material (9), and a sealing step during which a sealing film is positioned over the tray (2) and is fixed to the layer of thermoplastic material (9) at the annular flange (6) of the tray (2).

6. The method according to claim 5, wherein during the sealing step the sealing film is heated and mechanically pressed onto the layer of thermoplastic material (9) at the annular flange (6), at the same time pressing the layer of thermoplastic material (9) onto the annular flange (6) of the tray (2).

7. An apparatus for making a container comprising a tray (2) internally covered with a layer of thermoplastic material (9), the apparatus (13) comprising a thermoforming mould (7) which includes a first part (14) and a second part (15), at least one of which is movable relative to the other between a home position, in which the first part (14) and the second part (15) are at a distance from each other, and an operating position, in which the first part (14) and the second part (15) are coupled to each other in a gas-tight way, wherein the first part (14) defines a housing (16) configured to house a tray (2) of a predetermined type which comprises a bottom wall (4), a lateral wall (5) which extends upwards from the bottom wall (4) and an annular flange (6) which extends outwards starting from an upper part of the lateral wall (5), wherein the bottom wall (4), the lateral wall (5) and the annular flange (6) are constituted of a single sheet of material, folded and shaped in such a way that the annular flange (6) and the lateral wall (5) have wrinkled zones (3);
wherein the apparatus (13) also comprises:
means for positioning a sheet of thermoplastic material (1) between the first part (14) and the second part (15) when they are placed in the home position, the passage of the first part (14) and of the second part (15) from the home position to the operating position in use causing clamping of the sheet of thermoplastic material (1) between the first part (14) and the second part (15);
means for heating the sheet of thermoplastic material (1) clamped between the first part (14) and the second part (15);
suction means associated with the first part (14) to create in use a vacuum between the heated sheet of thermoplastic material (1) and the first part (14) and/or blowing means associated with the second part (15) for feeding pressurised air between the second part (15) and the heated sheet of thermoplastic material (1), to deform the sheet of thermoplastic material (1) and to make it stick to the bottom wall (4), to the lateral wall (5) and to the annular flange (6) of the tray (2), making the layer of thermoplastic material (9);
and wherein:
identifiable respectively in the first part (14) and in the second part (15) there are a first peripheral portion (8) configured to support in use the annular flange (6) of the tray (2) and a second peripheral portion (17) which, in the operating position, is facing the first peripheral portion (8); and
in the operating position, the second peripheral portion (17) is at a distance from the first peripheral portion (8) in such a way that it does not make contact with the layer of thermoplastic material (9) stuck to the tray (2), at the wrinkled zones (3) of the annular flange (6).

8. The apparatus according to claim 7, wherein in the operating position, the second peripheral portion (17) is at a distance from the first peripheral portion (8) in such a way that it does not make contact with the layer of thermoplastic material (9) stuck to the tray (2), at the entire the annular flange (6).

9. The apparatus according to claim 7 or 8, wherein, when the second part (15) is in the operating position, the second peripheral portion (17) is movable relative to the rest of the second part (15), between a distal position and a proximal position, when it is in the proximal position the second peripheral portion (17) being closer to the first peripheral portion (8) than when it is in the distal position.

10. The apparatus according to any one of claims 7 to 9, also comprising cutting means (18) for cutting the sheet of thermoplastic material (1), which are positioned outside the first peripheral portion (8) and the second peripheral portion (17), wherein, when the first part (14) and the second part (15) are in the operating position, the cutting means (18) are switchable between an inactive configuration in which they are at a distance in use from the sheet of thermoplastic material (1) and an active configuration in which in use they interfere with the sheet of thermoplastic material (1), the switching of the cutting means (18) from the inactive configuration to the active configuration in use causing the cutting of the sheet of thermoplastic material (1).

## Patentansprüche

1. Ein Verfahren zur Herstellung eines Behälters, ein Tray beinhaltend, das im Inneren mit einer Schicht aus einem thermoplastischen Material bedeckt ist, das Verfahren beinhaltet dabei folgende Arbeitsschritte:
einen Positionierungsschritt, bei dem ein Tray (2) in einem Thermoformwerkzeug (7) platziert wird, das Tray beinhaltet dabei eine Bodenwand (4) eine Seitenwand (5), die sich von der Bodenwand (4) nach oben erstreckt, und einen ringförmigen Flansch (6), der sich, beginnend an einem oberen Teil der Seitenwand (5), nach außen erstreckt, wobei die Bodenwand (4), die Seitenwand (5) und der ringförmige Flansch (6) aus einer einzigen Platte eines Materials bestehen, solcherart gefaltet und geformt, dass der ringförmige Flansch (6) und die Seitenwand (5) faltige Bereiche (3) haben;
einen Bedeckungsschritt, bei dem ein Blatt aus thermoplastischem Material (1) im Inneren des Thermoformwerkzeugs (7) am Tray (2) thermogeformt wird und dazu gebracht wird, an der Bodenwand (4), an der Seitenwand (5) und am ringförmigen Flansch (6) des Trays (2) festzukleben, dadurch die Schicht aus thermoplastischem Material (9) bildend, während der Ausführung des Bedeckungsschritts wird dabei verhindert, dass das Thermoformwerkzeug (7) in den faltigen Bereichen (3) des ringförmigen Flansches (6) in Kontakt mit der Schicht aus thermoplastischem Material (9) kommt.

2. Das Verfahren nach dem Patentanspruch 1, wobei während der Ausführung des Bedeckungsschritts verhindert wird, dass das Thermoformwerkzeug (7) am gesamten ringförmigen Flansch (6) in Kontakt mit dem Blatt aus thermoplastischem Material (1) kommt.

3. Das Verfahren nach dem Patentanspruch 1 oder 2, wobei während des Bedeckungsschritts das Blatt aus thermoplastischem Material (1) vom Thermoformwerkzeug (7) in einem ersten Bereich (10) davon zurückgehalten wird, der sich außerhalb eines zweiten Bereichs (11) davon, der während des Bedeckungsschritts am ringförmigen Flansch (6) angebracht wird, befindet.

4. Das Verfahren nach dem Patentanspruch 3, nach dem Bedeckungsschritt auch einen Schneideschritt beinhaltend, bei dem das Blatt aus thermoplastischem Material (1) in einem Randbereich (12) davon abgeschnitten wird, der sich außerhalb seines zweiten Bereichs (11) befindet.

5. Das Verfahren nach jedem der Patentansprüche 1 bis 4, nach dem Bedeckungsschritt auch einen Positionierungsschritt beinhaltend, bei dem im Tray (2), das im Inneren mit der Schicht aus thermoplastischem Material (9) bedeckt ist, ein Produkt platziert wird, und einen Versiegelungsschritt, bei dem eine Siegelfolie über dem Tray (2) platziert wird und am ringförmigen Flansch (6) des Trays (2) an der Schicht aus thermoplastischem Material befestigt wird.

6. Das Verfahren nach dem Patentanspruch 5, wobei während des Versiegelungsschritts die Siegelfolie erhitzt und mechanisch am ringförmigen Flansch (6) auf die Schicht aus thermoplastischem Material (9) gepresst wird, wobei gleichzeitig die Schicht aus thermoplastischem Material (9) auf den ringförmigen Flansch (6) des Trays (2) gepresst wird.

7. Eine Vorrichtung zur Herstellung eines Behälters, ein Tray (2) beinhaltend, das im Inneren mit einer Schicht aus einem thermoplastischen Material (9) bedeckt ist, die Vorrichtung (13) beinhaltet dabei ein Thermoformwerkzeug (7), das einen ersten Teil (14) und einen zweiten Teil (15) beinhaltet, von denen mindestens einer im Verhältnis zum anderen zwischen einer Ausgangsposition, in der der erste Teil (14) und der zweite Teil (15) in einem Abstand voneinander sind, und einer Betriebsposition, in der der erste Teil (14) und der zweite Teil (15) auf eine gasdichte Art miteinander verbunden sind, beweglich ist, wobei der erste Teil (14) ein Gehäuse (16) definiert, das beschaffen ist, um ein Tray (2) einer vorher festgelegten Art aufzunehmen, das eine Bodenwand (4), eine Seitenwand (5), die sich von der Bodenwand (4) nach oben erstreckt, und einen ringförmigen Flansch (6), der sich, beginnend an einem oberen Teil der Seitenwand (5), nach außen erstreckt, beinhaltet, wobei die Bodenwand (4), die Seitenwand (5) und der ringförmige Flansch (6) aus einer einzigen Platte eines Materials bestehen, solcherart gefaltet und geformt, dass der ringförmige Flansch (6) und die Seitenwand (5) faltige Bereiche (3) haben;
wobei die Vorrichtung (13) auch Folgendes beinhaltet:
Mittel zur Platzierung eines Blatts aus thermoplastischem Material (1) zwischen dem ersten Teil (14) und dem zweiten Teil (15), wenn sie sich in der Ausgangsposition befinden, der Wechsel des ersten Teils (14) und des zweiten Teils (15) von der Ausgangsposition in die Betriebsposition verursacht dabei im Gebrauch das Festklemmen des Blatts aus thermoplastischem Material (1) zwischen dem ersten Teil (14) und dem zweiten Teil (15);
Mittel zum Erhitzen des Blatts aus thermoplastischem Material (1), das zwischen dem ersten Teil (14) und dem zweiten Teil (15) festgeklemmt ist;
Saugmittel, die mit dem ersten Teil (14) verknüpft sind, um im Gebrauch ein Vakuum zwischen dem erhitzten Blatt aus thermoplastischem Material (1) und dem ersten Teil (14) zu erzeugen und/oder Gebläsemittel, die mit dem zweiten Teil (15) verknüpft sind, um Druckluft zwischen den zweiten Teil (15) und das erhitzte Blatt aus thermoplastischem Material (1) zuzuführen, um das Blatt aus thermoplastischem Material (1) zu verformen und es dazu zu bringen, an der Bodenwand (4), an der Seitenwand (5) und am ringförmigen Flansch (6) des Trays (2) festzukleben und so die Schicht aus thermoplastischem Material (9) zu bilden;
und wobei:
Es identifizierbar im ersten Teil (14) beziehungsweise im zweiten Teil (15) einen ersten Randabschnitt (8) gibt, der so beschaffen ist, dass er im Gebrauch den ringförmigen Flansch (6) des Trays (2) stützt, und einen zweiten Randabschnitt (17), der in der Betriebsposition zum ersten Randabschnitt (8) gerichtet ist; und
sich der zweite Randabschnitt (17) in der Betriebsposition solcherart in einem Abstand vom ersten Randabschnitt (8) befindet, dass er an den faltigen Bereichen (3) des ringförmigen Flansches (6) nicht in Kontakt mit der Schicht aus thermoplastischem Material (9) kommt, das am Tray (2) klebt.

8. Die Vorrichtung nach dem Patentanspruch 7, wobei sich der zweite Randabschnitt (17) in der Betriebsposition solcherart in einem Abstand vom ersten Randabschnitt (8) befindet, dass er am gesamten ringförmigen Flansch (6) nicht in Kontakt mit der Schicht aus thermoplastischem Material (9), das am Tray (2) klebt, kommt.

9. Die Vorrichtung nach dem Patentanspruch 7 oder 8, wobei, wenn sich der zweite Teil (15) in der Betriebsposition befindet, der zweite Randabschnitt (17) im Verhältnis zum Rest des zweiten Teils (15) zwischen einer distalen Position und einer proximalen Position beweglich ist, wenn er sich in der proximalen Position befindet, befindet sich der zweite Randabschnitt (17) dabei näher am ersten Randabschnitt (8) als dann, wenn er sich in der distalen Position befindet.

10. Die Vorrichtung nach jedem der Patentansprüche 7 bis 9, auch Schneidemittel (18) beinhaltend, um das Blatt aus thermoplastischem Material (1) abzuschneiden, die sich außerhalb des ersten Randabschnitts (8) und des zweiten Randabschnitts (17) befinden, wobei, wenn der erste Teil (14) und der zweite Teil (15) in der Betriebsposition sind, die Schneidemittel (18) zwischen einer nicht aktiven Anordnung, in der sie sich im Gebrauch in einem Abstand vom Blatt aus thermoplastischem Material (1) befinden, und einer aktiven Anordnung, in der sie im Gebrauch mit dem Blatt aus thermoplastischem Material (1) interagieren, umschaltbar sind, das Umschalten der Schneidemittel (18) von der nicht aktiven Anordnung in die aktive Anordnung verursacht dabei im Gebrauch das Durchschneiden des Blatt aus thermoplastischem Material (1).

## Revendications

1. Un procédé de fabrication d'un récipient comprenant un plateau recouvert intérieurement d'une couche de matière thermoplastique, le procédé comprenant les étapes opérationnelles suivantes :
une étape de positionnement, au cours de laquelle un plateau (2) est positionné dans un moule de thermoformage (7), le plateau comprenant une paroi de fond (4), une paroi latérale (5) qui s'étend vers le haut à partir de la paroi de fond (4) et une bride annulaire (6) qui s'étend vers l'extérieur à partir d'une partie supérieure de la paroi latérale (5), où la paroi de fond (4), la paroi latérale (5) et la bride annulaire (6) sont constituées d'une seule feuille de matériau, pliée et façonnée de manière à ce que la bride annulaire (6) et la paroi latérale (5) aient des zones plissées (3) ;
une étape de revêtement au cours de laquelle une feuille de matière thermoplastique (1) est thermoformée sur le plateau (2) à l'intérieur du moule de thermoformage (7), et mise en adhérence sur la paroi de fond (4), sur la paroi latérale (5) et sur la bride annulaire (6) du plateau (2) en formant la couche de matière thermoplastique (9), l'étape de revêtement étant effectuée en empêchant le moule de thermoformage (7) d'entrer en contact avec la couche de matière thermoplastique (9) au niveau des zones plissées (3) de la bride annulaire (6).

2. Le procédé selon la revendication 1, dans lequel l'étape de revêtement est effectuée en empêchant le moule de thermoformage (7) d'entrer en contact avec la feuille de matière thermoplastique (1) au niveau de toute la bride annulaire (6).

3. Le procédé selon la revendication 1 ou 2, dans lequel au cours de l'étape de revêtement la feuille de matière thermoplastique (1) est retenue par le moule de thermoformage (7) au niveau d'une propre première zone (10), qui est située à l'extérieur par rapport à une propre deuxième zone (11) qui, lors de l'étape de revêtement, est appliquée sur la bride annulaire (6).

4. Le procédé selon la revendication 3, comprenant également, après l'étape de revêtement, une étape de coupe au cours de laquelle la feuille de matière thermoplastique (1) est coupée au niveau d'une propre zone de bord (12) qui est extérieure à sa deuxième zone (11).

5. Le procédé selon l'une quelconque des revendications de 1 à 4, comprenant également, après l'étape de revêtement, une étape de positionnement au cours de laquelle un produit est positionné dans le plateau (2) recouvert intérieurement de la couche de matière thermoplastique (9), et une étape de scellage au cours de laquelle un film de scellage est positionné au-dessus du plateau (2) et est fixé à la couche de matière thermoplastique (9) au niveau de la bride annulaire (6) du plateau (2).

6. Le procédé selon la revendication 5, dans lequel au cours de l'étape de scellage le film de scellage est chauffé et pressé mécaniquement sur la couche de matière thermoplastique (9) au niveau de la bride annulaire (6), en pressant en même temps la couche de matière thermoplastique (9) sur la bride annulaire (6) du plateau (2).

7. Un appareil de fabrication d'un récipient comprenant un plateau (2) recouvert intérieurement d'une couche de matière thermoplastique (9), l'appareil (13) comprenant un moule de thermoformage (7) qui inclut une première partie (14) et une deuxième partie (15), dont au moins l'une est mobile par rapport à l'autre entre une position de repos, dans laquelle la première partie (14) et la deuxième partie (15) sont espacées l'une de l'autre, et une position opérationnelle, dans laquelle la première partie (14) et la deuxième partie (15) sont accouplées l'une avec l'autre de façon étanche aux gaz, dans lequel la première partie (14) définit un logement (16) configuré pour loger un plateau (2) d'un type prédéfini qui comprend une paroi de fond (4), une paroi latérale (5) qui s'étend vers le haut à partir de la paroi de fond (4) et une bride annulaire (6) qui s'étend vers l'extérieur à partir d'une partie supérieure de la paroi latérale (5), dans lequel la paroi de fond (4), la paroi latérale (5) et la bride annulaire (6) sont constituées d'une seule feuille de matériau, pliée et façonnée de manière à ce que la bride annulaire (6) et la paroi latérale (5) aient des zones plissées (3) ;
dans lequel l'appareil (13) comprend également :
des moyens de positionnement d'une feuille de matière thermoplastique (1) entre la première partie (14) et la deuxième partie (15) lorsqu'elles sont placées dans la position de repos, le passage de la première partie (14) et de la deuxième partie (15) de la position de repos à la position opérationnelle causant, lors de l'utilisation, le serrage de la feuille de matière thermoplastique (1) entre la première partie (14) et la deuxième partie (15) ;
des moyens de chauffage de la feuille de matière thermoplastique (1) serrée entre la première partie (14) et la deuxième partie (15) ;
des moyens d'aspiration associés à la première partie (14) pour créer, lors de l'utilisation, un vide entre la feuille de matière thermoplastique (1) chauffée et la première partie (14) et/ou des moyens de soufflage associés à la deuxième partie (15) pour alimenter de l'air sous pression entre la deuxième partie (15) et la feuille de matière thermoplastique (1) chauffée, afin de déformer la feuille de matière thermoplastique (1) et de la faire adhérer à la paroi de fond (4), à la paroi latérale (5) et à la bride annulaire (6) du plateau (2), réalisant ainsi la couche de matière thermoplastique (9) ;
et dans lequel :
dans la première partie (14) et dans la deuxième partie (15) sont identifiables, respectivement, une première portion périphérique (8) configurée pour supporter lors de l'utilisation la bride annulaire (6) du plateau (2) et une deuxième portion périphérique (17) qui, dans la position opérationnelle, fait face à la première portion périphérique (8) ; et
dans la position opérationnelle, la deuxième portion périphérique (17) est espacée de la première portion périphérique (8) de manière à ce qu'elle n'entre pas en contact avec la couche de matière thermoplastique (9) collée au plateau (2), au niveau des zones plissées (3) de la bride annulaire (6).

8. L'appareil selon la revendication 7, dans lequel dans la position opérationnelle, la deuxième portion périphérique (17) est espacée de la première portion périphérique (8) de manière à ce qu'elle n'entre pas en contact avec la couche de matière thermoplastique (9) collée au plateau (2), au niveau de toute la bride annulaire (6).

9. L'appareil selon la revendication 7 ou 8, dans lequel, lorsque la deuxième partie (15) est dans la position opérationnelle, la deuxième portion périphérique (17) est mobile par rapport au reste de la deuxième partie (15), entre une position distale et une position proximale, lorsqu'elle se trouve dans la position proximale la deuxième portion périphérique (17) étant plus près de la première portion périphérique (8) que lorsqu'elle se trouve dans la position distale.

10. L'appareil selon l'une quelconque des revendications de 7 à 9, comprenant également des moyens de coupe (18) pour couper la feuille de matière thermoplastique (1), qui sont positionnés à l'extérieur par rapport à la première portion périphérique (8) et à la deuxième portion périphérique (17), dans lequel, lorsque la première partie (14) et la deuxième partie (15) sont dans la position opérationnelle, les moyens de coupe (18) peuvent être commutés entre une configuration inactive dans laquelle ils sont espacés, lors de l'utilisation, de la feuille de matière thermoplastique (1) et une configuration active dans laquelle, lors de l'utilisation, ils interfèrent avec la feuille de matière thermoplastique (1), la commutation des moyens de coupe (18) de la configuration inactive à la configuration active, lors de l'utilisation, causant la coupe de la feuille de matière thermoplastique (1).
